# EUROPÄISCHE PATENTANMELDUNG

(11) **EP 3 106 271 A2**
(43) Veröffentlichungstag der Anmeldung: **21.12.2016**
(21) Anmeldenummer: 16174528.6
(22) Anmeldetag: 15.06.2016
(51) Int. Cl.: B25J 15/02, B25J 15/10

(54) **GREIFVORRICHTUNG**

(30) Priorität: 18.06.2015 DE 102015109760
(71) Anmelder: Askion GmbH, 07549 Gera (DE)
(72) Erfinder: BÜRGERMEISTER, Daniel, 08058 Zwickau (DE); MAHN, Alexander, 04600 Altenburg (DE)
(74) Vertreter: Oehmke, Volker

(57) **Zusammenfassung**

Die Greifvorrichtung ist insbesondere zum Handhaben von Probenträgerplatten innerhalb und außerhalb von Kryoräumen, und damit für einen Betriebstemperaturbereich von +20 °C bis -200 °C geeignet.

Sie enthält einen Grundkörper (1) mit einer geometrischen Mittenachse (1.1), zwei zueinander kreuzweise versetzte Greiffingerpaare (2, 3), deren Greiffinger (2.1, 3.1) zu der geometrischen Mittenachse (1.1) des Grundkörpers (1) paarweise, jeweils zentralsymmetrisch und in unterschiedlichen Führungsebenen (E2, E3) angeordnet sind, sowie eine zwischen den Führungsebenen (E2, E3) angeordnete Drehscheibe (4) mit vier um 90° zueinander versetzte und zu deren Drehpunkt, der auf der Mittelachse (1.1) liegt, radial gerichtete gerade Führungsschlitzen (9), in die mit den Greiffingern (2.1, 3.1) verbundene Mitnehmerbolzen (8) eingreifen.

## Beschreibung

Die Erfindung betrifft eine Greifvorrichtung geeignet zum Aufnehmen, Transportieren und Absetzen von rechteckigen Probenträgerplatten innerhalb und außerhalb von Kryoräumen.

Die Verwendung von Greifvorrichtungen bildet die Basis für viele automatisierte Prozesse, wobei die Greifvorrichtung, je nach Art, Ausrichtung und Zugänglichkeit der zu greifenden Objekte, an diese angepasst ist. Zum Aufnehmen der Objekte verfügen die Greifervorrichtungen häufig über mindestens zwei Greiffinger, die motorisch über unterschiedlichst ausgeführte Mechanismen gegensinnig bewegt werden. Aus dem Stand der Technik ist bereits eine Vielzahl solcher Mechanismen bekannt.

Eine in der EP 2 286 964 A1 offenbarte Greifvorrichtung zum Greifen von Bauteilen verfügt über zwei bewegliche Greiffinger (hier als Greifelement bezeichnet). Für eine Öffnungs- und Schließbewegung der Greiffinger ist ein Antriebsmittel vorhanden, das eine Drehbewegung erzeugt. Die Drehbewegung wird mittels eines Umsetzmechanismus in eine lineare Bewegung der Greiffinger umgesetzt. Dazu weist der Umsetzmechanismus ein scheibenförmiges Kurvenbahnelement mit einer gleichen Anzahl von spiralförmig geschlitzten Kurvenbahnen auf, wie Greiffinger vorhanden sind. Das Kurvenbahnelement ist zwischen zwei scheibenförmigen Führungselementen um eine Drehachse drehbar beweglich aufgenommen, in denen gemäß einer Ausführung mit zwei Greiffingern deckungsgleich übereinanderliegend jeweils eine lineare Führungsbahn angeordnet ist. In einem Abschnitt der Greiffinger sind diese durch die Führungsbahnen und die Kurvenbahn hindurch geführt, wobei sie innerhalb der Führungsbahnen und der Kurvenbahn beweglich sind. Bei einer Rotation des Kurvenbahnelements relativ zu den unbeweglichen Führungselementen wird der Greiffinger durch die spiralförmige Kurvenbahn des Kurvenbahnelements mitgenommen und drehrichtungsabhängig zwischen einer Öffnungs- und einer Schließstellung linear in den Führungsbahnen bewegt. Die Umsetzung der Drehgeschwindigkeit in die Geschwindigkeit des linearen Bewegungsverlaufs wird von der Form und der Länge der Kurvenbahn bestimmt. Die Genauigkeit der Positionierung der Greiffinger wird in Bewegungsrichtung, das heißt radial zur Drehachse des Kurvenbahnelementes, durch das Spiel zwischen dem Durchmesser des Greiffingers im Eingriffsbereich des Kurvenbahnelementes und der Schlitzbreite der Kurvenbahn bestimmt. Senkrecht zur Bewegungsrichtung wird die Genauigkeit der Positionierung der Greiffinger durch das Spiel zwischen dem Durchmesser des Greiffingers im Eingriffsbereich und der Breite der Führungsbahnen bestimmt. Für einen Einsatz einer derartigen Greifvorrichtung innerhalb großer Temperaturbereiche, die Normaltemperaturen von z.B. +20 °C bis hin zu typischen Temperaturen in Kryoräumen, von z.B. -195,8 °C einschließen, wofür eine solche Greifvorrichtung explizit nicht vorgesehen ist, muss das Spiel für die Extremtemperaturen immer noch ausreichend groß sein, dass es nicht zu einem Klemmen der Greiffinger in den Führungsbahnen bzw. der Kurvenbahn kommt. Um das Spiel dennoch klein zu halten, müsste man Materialpaarungen für die Greiffinger einerseits sowie das Kurvenbahnelement und die Führungselemente andererseits wählen, die einen wenigstens annähernd gleichen Wärmeausdehnungskoeffizienten aufweisen. Hier geeignete Materialpaarungen zu finden, die auch den sonstigen Anforderungen an eine solche Führungsbaugruppe gerecht werden, wie ein geringes Gewicht, ein günstiges Gleitverhalten, eine hohe Abriebfestigkeit, eine hohe Biegesteifigkeit und geringe Materialkosten zu finden ist technisch und wirtschaftlich schwierig.

Eine weitere Greifvorrichtung ist in der Offenlegungsschrift DD 276 646 A1 1 beschrieben, die zwei zu einer geometrischen Mittenachse eines Grundkörpers kreuzweise zentriert angeordnete Greiffingerpaare aufweist. Durch eine lineare Verschiebung der Greiffinger am Grundkörper wird die Greifvorrichtung geöffnet und geschlossen. Die Greiffinger eines Greiffingerpaares sind identisch ausgeführt und zentralsymmetrisch zur Mittenachse angeordnet. Sie sind jeweils an einem ersten Ende als Führungsstange ausgebildet und weisen an ihrem zweiten freien Ende eine Kontaktfläche auf. Die Kontaktflächen sind als Anlageflächen ausgeführt, zwischen denen das Objekt kraftschlüssig gehalten wird. Die Führungsstangen spannen gemeinsam eine Führungsebene auf und sind jeweils zwischen zwei mit dem Grundkörper in Verbindung stehenden Führungsschienen in jeweils einer Schubrichtung geführt. Jeweils zwei Führungsschienen und eine Führungsstange bilden eine Linearführung. Die Führungsschienen sind tangential jeweils zu einer gedachten Kreislinie um die geometrische Mittenachse und paarweise um 90° zueinander versetzt angeordnet, sodass sich für die Führungsstangen jeweils zwei Schubrichtungen mit jeweils einem entgegengesetzten Richtungssinn ergeben. An den Führungsstangen ist jeweils ein Mitnehmerbolzen senkrecht zur Schubrichtung der Führungsstange angeordnet. Die Mitnehmerbolzen zweier ein Greiffingerpaar bildenden Greiffinger greifen jeweils in einen Führungsschlitz einer um die geometrische Mittenachse und damit gegenüber dem Grundkörper drehbaren Drehscheibe ein. Es sind zwei derartige Drehscheiben vorhanden, die miteinander über zwei Federn verbunden sind. Mit dem Einleiten einer Drehbewegung in eine der beiden Drehscheiben, die andere Drehscheibe wird dabei über eine der beiden Federverbindungen mitgenommen, werden die beiden Führungsstangen eines Greiffingerpaares gegensinnig zwischen den zugeordneten Führungsschienen verschoben. Dabei werden die Anlageflächen aller Greifelemente entweder von der Mittenachse weg bewegt, um zwischen ihnen einen Abstand zu schaffen, der größer ist als die hierzu relevanten Abmaße des zu greifenden Objektes, oder zu der Mittenachse hin bewegt, um das Objekt zwischen den Anlageflächen kraftschlüssig zu halten.

Die Anlageflächen sind jeweils an einem mit den Führungsstangen starr verbundenen Distanzstück ausgebildet, dessen Geometrie und Dimension so gewählt ist, dass die Anlageflächen über einen gleichen geradlinigen Verschiebeweg wie die Schubstangen, allerdings örtlich versetzt, in radialer Richtung zur Mittenachse verschiebbar sind, und zwischen ihnen ausreichend freier Raum zur Anordnung des zu greifenden Objektes vorhanden ist.

Die beiden Drehscheiben, sind über Kreuz zueinander versetzt angeordnet und verfügen jeweils über zwei am Außendurchmesser beginnende, sich gegenüberliegende, radial verlaufende, gerade Führungsschlitze. In den Führungsschlitzen sind die Mitnehmerbolzen geführt. Die kreuzweise und über die Feder gekoppelte Bewegung der Greiffingerpaare ermöglicht es, dass stets eine Zentrierung rechteckiger Objekte, auch abweichend von quadratischen Objekten, gegenüber der Mittenachse des Grundkörpers erfolgt, und diese mit vier Greiffingern gehalten werden können.

Für eine Verwendung innerhalb der genannten großen Temperaturbereiche ist eine derartige Greifvorrichtung nicht geeignet, da die Präzision der Führung der Greifelemente bei üblicher Verwendung unterschiedlicher Materialien der Führungsschienen und Führungsstangen zur Realisierung einer gut funktionierenden Gleitpaarung temperaturabhängig starken Schwankungen unterliegt. Dadurch kann ein Aufnehmen und Halten von Objekten mit automatisierten reproduzierbaren Bewegungsabläufen gefährdet sein. Auch führt die Federverbindung zwischen den beiden Drehscheiben, aufgrund der Temperaturabhängigkeit der Federkennlinie der Federverbindung, bei gleichem Drehwinkel der angetriebenen Drehscheibe zu temperaturabhängig unterschiedlich wirkenden Haltekräften zwischen den beiden, über die mitgenommene Scheibe, bewegten Greiffingern.

Es ist die Aufgabe der Erfindung, eine Greifvorrichtung, geeignet zum Greifen von rechteckigen Probenträgerplatten zu schaffen, die auch innerhalb eines Temperaturbereiches von +20 °C bis -200 °C eine reproduzierbare Bewegung der Greifelemente gewährleistet und gleichbleibende Haltebedingungen für Probenträgerplatten gewährleistet.

Diese Aufgabe wird durch eine Greifvorrichtung gemäß Anspruch 1 gelöst. Vorteilhafte Ausführungen sind in den Unteransprüchen angegeben.

Es ist erfindungswesentlich, dass die Linearführungen in zwei Führungsebenen angeordnet sind, und die Mitnehmerbolzen der beiden Greiffingerpaare jeweils von entgegengesetzten Seiten her in die Führungsschlitze einer Drehscheibe eingreifen. Durch diese Maßnahme können sich die Führungsschienen, die jeweils einem Greiffingerpaar zugeordnet sind, über die gesamte Ausdehnung des Grundkörpers erstrecken. Bei einem vergleichbar großen Führungsspiel mit dem einer Linearführung einer Greifvorrichtung gemäß der DD 276 646 A1 ist der sich ergebende maximale Kippwinkel, um den sich die Führungsstange gegenüber der Schubrichtung verkippen kann, deutlich kleiner, womit die Führungsqualität besser ist.

Insbesondere durch die Anforderung an die Tauglichkeit für den Einsatz in einem Temperaturbereich von +20 °C bis -200°C kann das Führungsspiel erheblich schwanken, wenn für die gepaarten Bauteile der Linearführungen, die Gleit- oder Wälzführungen sein können, die hierfür üblichen unterschiedlichen Materialien verwendet werden.

Es wird als eine zusätzliche vorteilhafte Maßnahme gesehen, wenn die Linearführungen als Lineargleitführungen mit zwei Führungsschienen ausgeführt sind, wobei eine der jeweils zwei Führungsschienen mittels einer Feder auf die andere fest angeordnete Führungsschiene zustellbar ist. Damit wird, unabhängig von der Temperatur und damit vom Führungsspiel, welches sich durch das thermische Verhalten der Linearführung über den Betriebstemperaturbereich verändert, die zustellbare Führungsschiene jeweils an die feste Führungsschiene angelegt, womit das Führungsspiel herausgedrückt wird. Die Federn müssen dabei so dimensioniert sein, dass sie bei jeder Temperatur innerhalb des möglichen Betriebstemperaturbereiches gespannt an der zustellbaren Führungsschiene anliegen.

Durch eine Ausführung der Kontaktflächen als Auflageflächen, wird ein aufgenommenes Objekt, insbesondere eine Probenträgerplatte nur durch ihre Gewichtskraft auf den Auflageflächen aufliegend gehalten, womit die Haltebedingungen temperaturunabhängig konstant sind.

Die Erfindung soll nachfolgend anhand von Ausführungsbeispielen mit Hilfe von Zeichnungen erläutert werden. Hier zeigt:
- Fig. 1: eine Greifvorrichtung in perspektivischer Ansicht
- Fig. 2: eine vertikale Schnittdarstellung der Greifvorrichtung gemäß Fig. 1
- Fig. 3: eine horizontale Schnittdarstellung unterhalb der ersten Führungsebene
- Fig. 4: eine horizontale Schnittdarstellung unterhalb der Drehebene
- Fig. 5: eine horizontale Schnittdarstellung unterhalb der zweiten Führungsebene

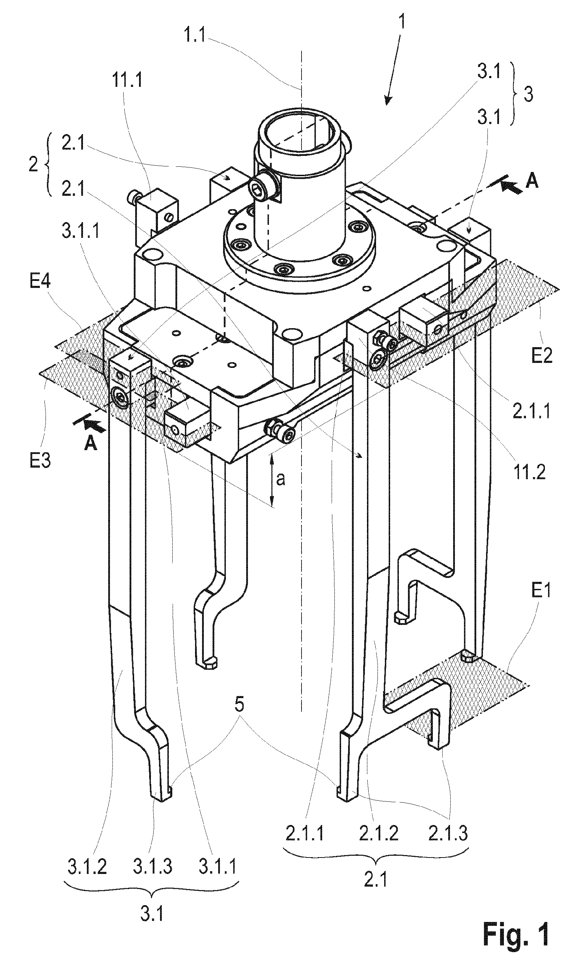

Eine Greifvorrichtung, wie in Fig. 1 gezeigt, weist im Wesentlichen einen Grundkörper 1 mit einer geometrischen Mittenachse 1.1, zwei zueinander kreuzweise versetzte Greiffingerpaare 2, 3, deren Greiffinger 2.1, 3.1 zu der geometrischen Mittenachse 1.1 des Grundkörpers 1 paarweise, jeweils zentralsymmetrisch angeordnet sind, und eine Drehscheibe 4 zur Übertragung einer Drehbewegung in eine Linearbewegung der vier Greiffinger 2.1, 3.1 auf.

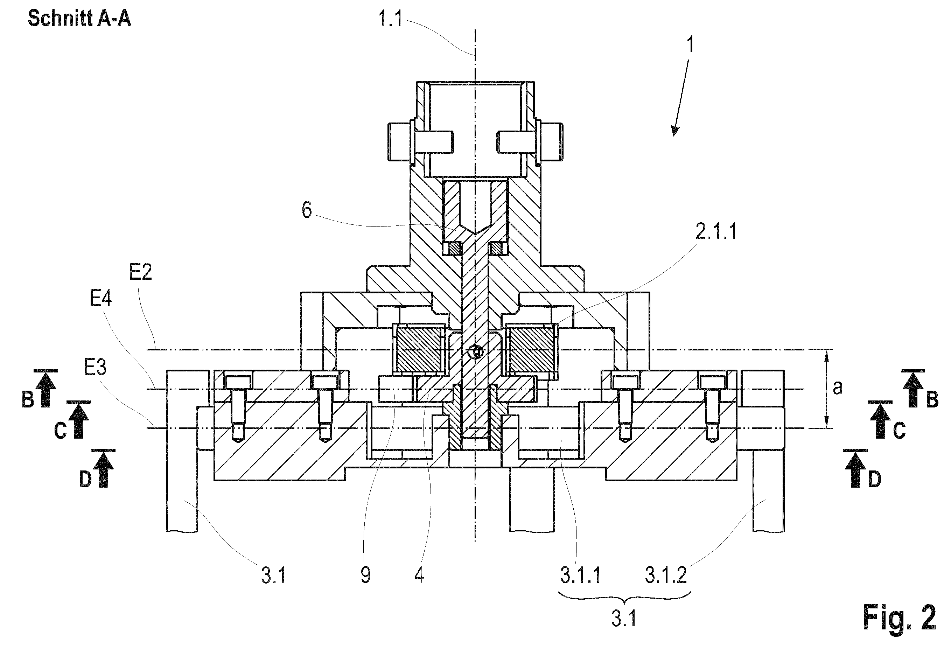

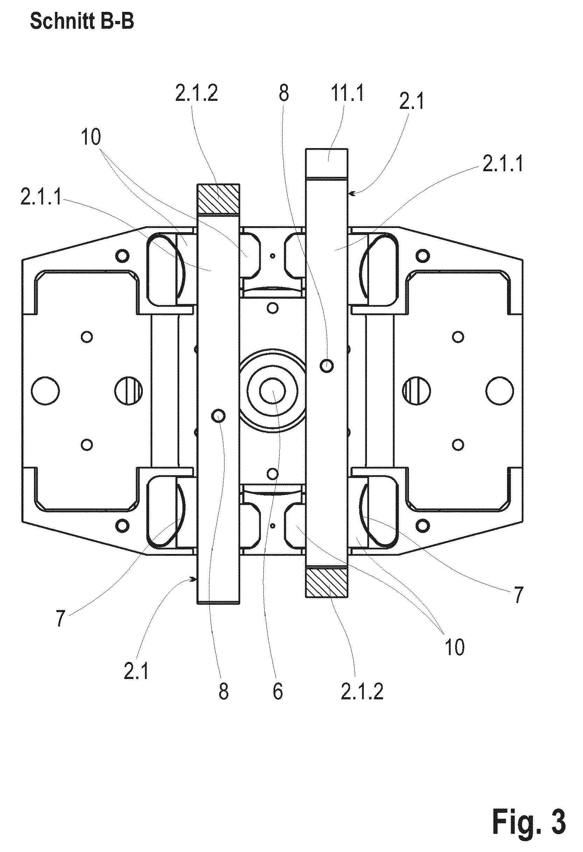

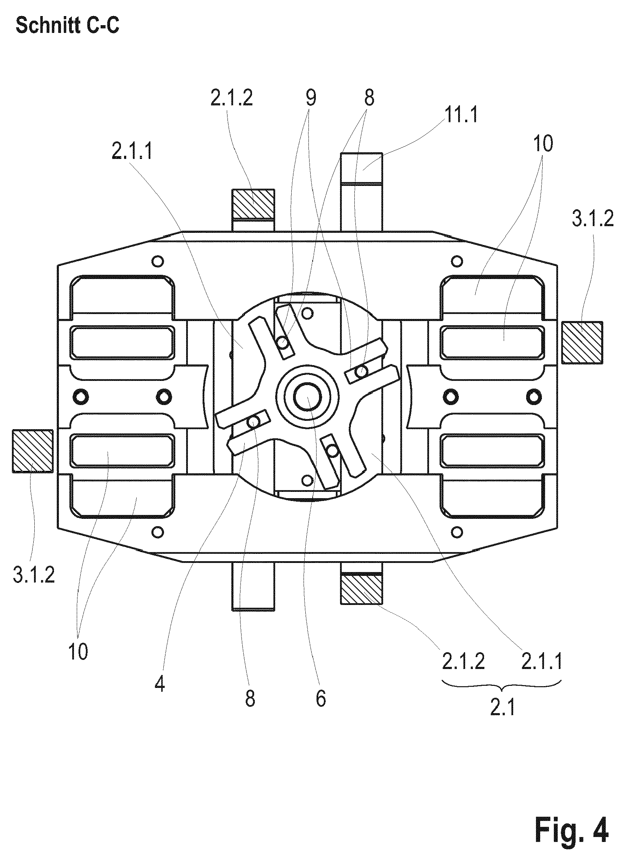

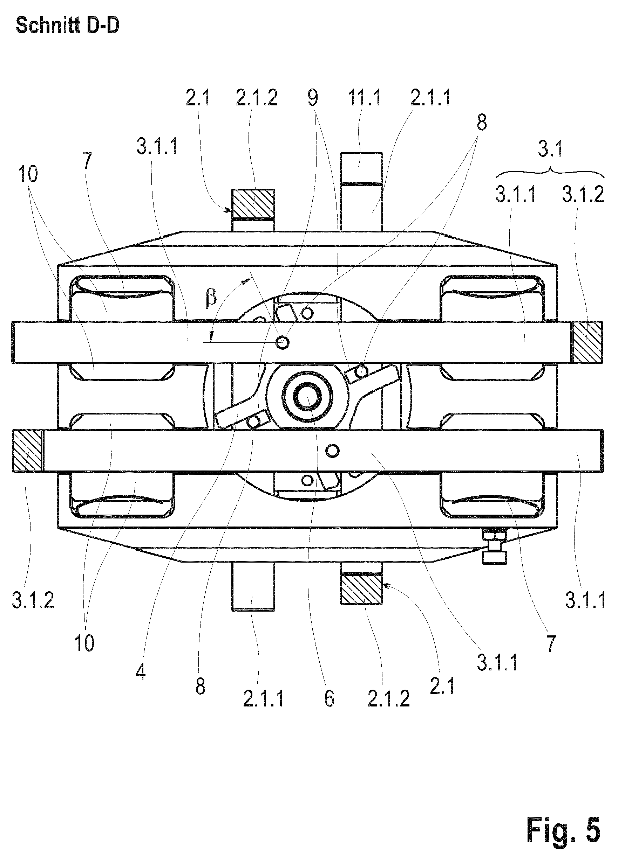

Die Fig. 2 dient hauptsächlich dazu, um zu zeigen, wo die Schnittebenen liegen, die in den Fig. 3, 4 und 5 dargestellt sind. Für die nachfolgende Beschreibung ist wechselweise die Ansicht der einzelnen Figuren von Vorteil.

Über die lineare Bewegung der Greiffinger 2.1, 3.1 am Grundkörper 1 entlang eines Stellweges wird die Greifvorrichtung geöffnet, um ein rechteckiges Objekt, insbesondere eine Probenträgerplatte, aufzunehmen oder abzusetzen, und geschlossen, um diese zu halten.

Der Grundkörper 1 ist mehrteilig ausgeführt und dient als Basis, an der alle weiteren Bauteile oder Baugruppen angebracht sind.

Koaxial zur geometrischen Mittenachse 1.1 des Grundkörpers 1 ist eine Antriebsachse 6 im Grundkörper 1 gelagert angeordnet, die in Betriebsposition der Greifvorrichtung vertikal verläuft und von oben her zugängig ist, sodass sie mit einem Antrieb verbunden werden kann, der nicht zwingend zur Greifvorrichtung gehört. Über die Antriebsachse 6 wird eine Drehbewegung um einen Drehwinkel in die auf der Antriebsachse 6 in einer horizontalen Drehebene E4 befestigte Drehscheibe 4 eingeleitet.

Im Interesse einer einfachen Beschreibung der Greifvorrichtung wird diese nachfolgend in der Betriebsposition beschrieben, in der die Antriebsachse 6 vertikal ausgerichtet ist, und die Kontaktflächen 5 an den freien Enden der Greiffinger 2.1.3, 3.1.3 in einer horizontalen Halteebene E1 unterhalb des Grundkörpers 1 angeordnet sind.

Bei der Definition diverser Ebenen, wie der Halteebene E1, wird die vertikale Dimension der Bauteile, deren Anordnung die Lage der betreffenden Ebene bestimmt, wie die freien Enden der Greiffinger 2.1.3, 3.1.3, vernachlässigt. Die Beschreibung der Greifvorrichtung ist dennoch eindeutig, da die Angabe der Ebenen lediglich dazu dient, die Relativlage der betreffenden Bauteile zueinander zu beschreiben, weshalb sie irgendwo in den Bereich der tatsächlichen vertikalen Ausdehnung der betreffenden Bauteile gelegt sein können.

Die Greiffinger 2.1, 3.1 jeweils eines Greiffingerpaares 2, 3 sind bis auf mögliche Variationen der freien Enden 2.1.3, 3.1.3 identisch ausgeführt und zentralsymmetrisch zur geometrischen Mittenachse 1.1 angeordnet. Sie sind jeweils an einem ersten Ende als Führungsstange 2.1.1, 3.1.1 ausgebildet und weisen an ihrem zweiten freien Ende 2.1.3, 3.1.3 jeweils wenigstens eine Kontaktfläche 5 auf.

Die Führungsstangen 2.1.1 der Greiffinger 2.1 des ersten Greiffingerpaares 2 sind in einer horizontalen ersten Führungsebene E2 angeordnet, während die Führungsstangen 3.1.1 der Greiffinger 3.1 des zweiten Greiffingerpaares 3 in einer horizontalen zweiten Führungsebene E3 unterhalb der ersten Führungsebene E2 und mit einem Abstand a zu dieser angeordnet sind.

Die Greiffinger 2.1, 3.1 weisen zwischen den als Führungsstangen 2.1.1, 3.1.1 ausgebildeten ersten Enden und den Kontaktflächen 5 an zweiten freien Enden 2.1.3, 3.1.3 jeweils ein Distanzstück 2.1.2, 3.1.2 auf, welches die Aufgabe hat, den Stellweg, den die Führungsstangen 12 in der ersten bzw. zweiten Führungsebene E2, E3 vollziehen, in eine Halteebene E1 unterhalb des Grundkörpers 1, in welcher die freien, zweiten Enden 2.1.3, 3.1.3 der Greiffinger 2.1, 3.1 angeordnet sind, zu übertragen. Dabei kann der durch die Kontaktflächen 5 der freien, zweiten Enden 2.1.3, 3.1.3 beschriebene Stellweg innerhalb der Halteebene E1 zum Stellweg der jeweils zugeordneten Führungsstange 2.1.1, 3.1.1 parallel versetzt zurück gelegt werden.

Wie in Fig. 1 gezeigt, können die freien Enden 2.1.3, 3.1.3 der Greiffinger 2.1, 3.1, auch der eines Greiffingerpaares 2, 3, unterschiedlich ausgeführt sein. Sie können eine oder auch mehrere Kontaktflächen 5 aufweisen. Sie können, wie gezeigt, als horizontale Auflageflächen und/oder als vertikale Anlageflächen ausgeführt sein, die um den Umfang einer gedacht eingelegten Probenträgerplatte verteilt angeordnet sind.

Alle Führungsstangen 2.1.1, 3.1.1 sind jeweils zwischen zwei, mit dem Grundkörper 1 in Verbindung stehenden, Führungsschienen 10 in jeweils einer Schubrichtung geführt. Jeweils zwei der Führungsschienen 10 und eine Führungsstange 2.1.1, 3.1.1 bilden eine Lineargleitführung. Die mit dem ersten Greiffingerpaar 2 gebildeten Linearführungen und die mit dem zweiten Greiffingerpaar 3 gebildeten Linearführungen sind jeweils tangential zu einer gedachten Kreislinie um die geometrische Mittenachse 1.1 parallel zueinander verlaufend, das heißt zueinander um 180⁰ versetzt, angeordnet, sodass sich für die Führungsstangen 2.1.1, 3.1.1 der Greiffinger 2.1, 3.1 jeweils eines Greiffingerpaares 2, 3 eine gleiche Schubrichtung mit einem entgegengesetzten Richtungssinn ergibt.

Die Greiffingerpaare 2, 3 sind über Kreuz, das heißt zueinander um 90° versetzt, angeordnet, sodass deren Schubrichtungen senkrecht zueinander verlaufen.

Die gedachten Kreislinien können einen gleichen oder unterschiedlichen Durchmesser haben, der in jedem Fall kleiner als der Außendurchmesser der Drehscheibe 4 ist.

An den Führungsstangen 2.1.1, 3.1.1 ist jeweils ein Mitnehmerbolzen 8 vertikal und damit senkrecht zur Schubrichtung der jeweiligen Führungsstange 2.1.1, 3.1.1 angeordnet. Die Mitnehmerbolzen 8 greifen jeweils in eine von vier Führungsschlitzen 9 ein, die an der Drehscheibe 4 um 90° zueinander versetzt ausgebildet sind.

Um eine kreisförmige Drehbewegung der Drehscheibe 4, bei der in jedem Moment jeder Punkt der Drehscheibe 4 eine translatorische Bewegung in x und y Richtung eines in den Drehpunkt gedachten kartesischen Koordinatensystems erfährt, in eine translatorische tangentiale Bewegung zu übertragen, müssen die Führungsschlitze 9 so ausgeführt und angeordnet sein, dass - in Abhängigkeit von der relativen Anordnung der Mitnehmerbolzen 8 zur Drehscheibe 4 - über einen beabsichtigten Drehwinkel zwischen geöffneter und geschlossener Position der Greifvorrichtung nur die Bewegungskomponente in tangentialer Richtung auf den Mitnehmerbolzen 8 übertragen wird. Ein radial angeordneter, gerader Führungsschlitz 9 erfüllt diese Bedingungen und lässt sich, insbesondere wenn er zum Umfang der Drehscheibe 4 hin offen ist, am einfachsten herstellen. Aber auch andere Schlitzformen und Schlitzanordnungen können die Bedingungen erfüllen. Die Führungsschlitze 9 sind in einfachster Form als radial ausgerichtete, gerade und um 90° zueinander versetzte Schlitze ausgeführt.

Über die Wahl des Anstellwinkels β, welchen die Führungsschlitze 9 in der geschlossenen Position der Greifvorrichtung mit der über den Mitnehmerbolzen 8 zugeordneten Führungsstange 2.1.1, 3.1.1 einschließen, kann das Geschwindigkeitsprofil der linearen Bewegung beeinflusst werden, z.B. um die Bewegung zur geschlossenen Position hin zu verlangsamen.

Der Durchmesser der gedachten Kreislinien ist proportional zum Stellweg, welcher in die Führungsstangen 2.1.1, 3.1.1 bei einem gleichen Drehwinkel eingeleitet wird.

Sind die Durchmesser der gedachten Kreislinien gleich groß, wird in die Greiffinger 2.1, 3.1 beider Greiffingerpaare 2, 3 ein gleicher Stellweg eingeleitet, was naheliegend ist, wenn die Probenträgerplatte kraftschlüssig zwischen den als Anlageflächen ausgebildeten Kontaktflächen 5 gehalten wird. Sind die Kontaktflächen 5 als Auflageflächen ausgebildet, könnte es interessant sein, diese für die Greiffingerpaare 2, 3 unterschiedlich großflächig auszuführen, sodass unterschiedlich lange Stellwege für die Greiffinger 2.1, 3.1 der beiden Greiffingerpaare 2, 3 zwischen der geöffneten und der geschlossenen Position der Greifvorrichtung erforderlich sind.

Über das Verhältnis zwischen den Durchmessern der gedachten Kreislinien, an denen die Linearführungen des ersten und des zweiten Greiffingerpaares 2, 3 tangential liegen, kann die Greiffingervorrichtung für unterschiedliche Stellwege der Greiffingerpaare 2, 3 ausgelegt werden.

Die Kontaktflächen 5 an den freien zweiten Enden 2.1.3, 3.1.3 der Greiffinger 2.1, 3.1 als Auflageflächen auszuführen, hat den Vorteil, dass die Probenträgerplatten nur durch ihr Eigengewicht in der Greifvorrichtung zentriert gehalten werden.

Beim Betätigen der Greifvorrichtung werden die Kontaktflächen 5 aller Greiffinger 2.1, 3.1 entweder von der Mittenachse 1.1 weg bewegt, um zwischen ihnen einen Abstand zu schaffen, der größer ist, als die hierzu relevanten Abmaße der Probenträgerplatte, um die Greifvorrichtung zu öffnen, oder zu der Mittenachse 1.1 hin bewegt, um die Probenträgerplatte zu halten.

Das Verhältnis zwischen den Abständen der vertikalen Kontaktflächen 5 der Greiffinger 2.1, 3.1 des ersten Greiffingerpaares 2 und denen des zweiten Greiffingerpaares 3 ist auf das Längen-/Breitenverhältnis der zu greifenden Probenträgerplatte angepasst.

Um reproduzierbar eine geöffnete und eine geschlossene Position der Greifvorrichtung zu schaffen, sind Anschläge 11.1, 11.2 vorhanden, welche den Drehwinkel, um welchen die Drehscheibe 4 gedreht werden kann, begrenzen. Vorteilhaft ist ein erster Anschlag 5.1 für die geöffnete und ein zweiter Anschlag 5.2 für die geschlossene Position an einem der Greiffinger 2.1, 3.1 angeordnet, womit die Anschläge 11.1, 11.2 der Linearbewegung unmittelbar entgegenwirken. Eine solche Anordnung erlaubt eine robuste Ausführung und eröffnet darüber hinaus die Möglichkeit einer einfachen Verstellung des Stellweges der Führungsstangen 2.1.1, 3.1.1 und damit des Drehwinkels indem, wie aus Fig. 1 ableitbar, durch die Einführung einer Stellschraube durch den Anschlag 11.1 hindurch der Abstand zwischen den Anschlägen 11.1, 11.2 quasi verringert wird.

Vorteilhaft ist die Drehscheibe 4 auf ein Drehkreuz reduziert, bei dem jedes der vier Kreuzbeine einen der Führungsschlitze 9 einschließt. Zum einen wird dadurch eine Gewichtsreduktion erreicht und zum anderen weist das Drehkreuz, bei welchem die Kreuzbeine jeweils einen Führungsschlitz 9 mit Schenkeln gleicher Dicke begrenzen, ein besseres thermisches Verhalten auf.

Die Drehscheibe 4 ist in der Drehebene E4 angeordnet, die sich zwischen der ersten Führungsebene E2 und der zweiten Führungsebene E3 befindet. Entsprechend ragen die Mitnehmerbolzen 8 des ersten Greiffingerpaares 2 von oben und die Mitnehmerbolzen 8 des zweiten Greiffingerpaares 3 von unten in die Drehscheibe 4. Vorteilhaft gegenüber dem Stand der Technik, wie er durch die DD 276 646 A1 gegeben ist, ist insbesondere, dass sich die Linearführungen gegenseitig nicht räumlich beeinträchtigen und die Ausdehnung des Grundkörpers 1 vollständig für die Führungslängen der Linearführungen ausgeschöpft werden kann, was bei einem vergleichsweise gleichem Führungsspiel zu einer nur geringeren Verkippung der Führungsstangen 2.1.1, 3.1.1 führt.

Um eine Verkippung der Führungsstangen 2.1.1, 3.1.1 ganz auszuschließen, soll das Führungsspiel, welches sich innerhalb des Betriebstemperaturbereiches unterschiedlich groß einstellt, vorteilhaft ganz eliminiert werden. Zu diesem Zweck ist eine der Führungsschienen 10 einer jeden Linearführung fest mit dem Grundkörper 1 verbunden, während die jeweils andere auf die feste Führungsschiene zustellbar angeordnet ist, und über eine vorgespannte Feder 7 mit dem Grundkörper 1 in Verbindung steht.

Vorteilhaft ist die fest verbundene Führungsschiene 10 jeweils die näher zur Mittenachse 1.1 angeordnete Führungsschiene 10.

Die vorgespannten Federn 7 sind bei jeder Temperatur innerhalb des Betriebstemperaturbereiches gespannt, und wirken so jeweils mit einer Federkraft auf die zustellbaren Führungsschienen 10. Dadurch muss zwar beim Verschieben der Führungsstangen 2.1.1, 3.1.1 eine vergleichsweise größere Reibung überwunden werden, jedoch ist der damit erhöhte Energieaufwand vernachlässigbar und wird im Gegenzug mit einer verbesserten Führungsqualität in Kauf genommen.

Da die Greiffingerpaare 2, 3 in unterschiedlichen Führungsebenen E2, E3 liegen und somit einen unterschiedlichen Abstand zur Halteebene E1 haben, müssen die Distanzstücke 2.1.2, 3.1.2 entsprechend unterschiedlich dimensioniert sein.

### Bezugszeichenliste

- 1: Grundkörper
- 1.1: geometrische Mittenachse (des Grundkörpers)
- E1: Halteebene
- 2: erstes Greiffingerpaar
- 2.1: Greiffinger des ersten Greiffingerpaares
- 2.1.1: Führungsstange (eines der Greiffinger des ersten Greiffingerpaares)
- 2.1.2: Distanzstück (eines der Greiffinger des ersten Greiffingerpaares)
- 2.1.3: freies Ende (eines der Greiffinger des ersten Greiffingerpaares)
- E2: erste Führungsebene
- 3: zweites Greiffingerpaar
- 3.1: Greiffinger des zweiten Greiffingerpaares
- 3.1.1: Führungsstange (eines der Greiffinger des zweiten Greiffingerpaares)
- 3.1.2: Distanzstück (eines der Greiffinger des zweiten Greiffingerpaares)
- 3.1.3: freies Ende (eines der Greiffinger des zweiten Greiffingerpaares)
- E3: zweite Führungsebene
- 4: Drehscheibe
- E4: Drehebene
- 5.: Kontaktfläche
- 6: Antriebsachse
- 7: Feder
- 8: Mitnehmerbolzen
- 9: Führungsschlitz
- 10: Führungsschiene
- 11.1: erster Anschlag
- 11.2: zweiter Anschlag

- a: Abstand (zwischen den Führungsebenen E3 und E4)
- β: Anstellwinkel

## Patentansprüche

1. Greifvorrichtung geeignet zum Aufnehmen, Transportieren und Absetzen von rechteckigen Objekten, insbesondere Probenträgerplatten innerhalb und außerhalb von Kryoräumen,
aufweisend einen Grundkörper (1) mit einer geometrischen Mittenachse (1.1), zwei zueinander kreuzweise versetzte Greiffingerpaare (2, 3) deren Greiffinger (2.1, 3.1) zu der geometrischen Mittenachse (1.1) des Grundkörpers (1) paarweise, jeweils zentralsymmetrisch angeordnet sind,
ein Mittel zur Übertragung einer Drehbewegung in eine Linearbewegung der vier Greiffinger (2.1, 3.1), welches vier um 90° zueinander versetzte, zu einem Drehpunkt, der auf der Mittenachse (1.1) liegt, radial ausgerichtete gerade Führungsschlitze (9) aufweist,
wobei die Greiffinger (2.1, 3.1) jeweils an einem ersten Ende (2.1.3, 3.1.3) als Führungsstange (2.1.1, 3.1.1) ausgebildet und Bestandteil jeweils einer Linearführung sind, und an einem freien, zweiten Ende (2.1.3, 3.1.3) wenigstens eine Kontaktfläche (5) aufweisen, wobei an jeder der Führungsstangen (2.1.1, 3.1.1) ein Mitnehmerbolzen (8) angeordnet ist, der jeweils in eine der Führungsschlitze (9) eingreift, **dadurch gekennzeichnet, dass**,
die Führungsstangen (2.1.1) des ersten der Greiffingerpaare (2) in einer horizontalen ersten Führungsebene (E2) und die Führungsstangen (3.1.1) des zweiten der Greiffingerpaare (3) in einer horizontalen zweiten Führungsebene (E3) unterhalb der ersten Führungsebene (E2) mit einem Abstand (a) zu dieser angeordnet sind,
das Mittel zur Übertragung der Drehbewegung eine Drehscheibe (4) ist, welche in einer Drehebene (E4) angeordnet ist, die sich zwischen der ersten Führungsebene (E2) und der zweiten Führungsebene (E3) befindet, sodass die Mitnehmerbolzen (8) des ersten Greiffingerpaares (2) von oben und die Mitnehmerbolzen (8) des zweiten Greiffingerpaares (3) von unten in die Führungsschlitze (9) eingreifen.

2. Greifvorrichtung nach Anspruch 1, **dadurch gekennzeichnet,**
**dass** die Linearführungen Gleitführungen mit zwei Führungsschienen (10) sind, bei denen jeweils eine der Führungsschienen (10) fest mit dem Grundkörper (1) verbunden ist, und die andere der Führungsschienen (10) jeweils über eine vorgespannte Feder (7) mit dem Grundkörper (1) in Verbindung steht.

3. Greifvorrichtung nach Anspruch 2, **dadurch gekennzeichnet,**
**dass** die fest verbundene Führungsschiene (10) jeweils die näher zur Mittenachse (1.1) angeordnete Führungsschiene (10) ist.

4. Greifvorrichtung nach Anspruch 1, **dadurch gekennzeichnet,**
**dass** die Kontaktflächen (5) als Auflageflächen ausgeführt sind, so dass die Probenträgerplatten nur durch ihr Eigengewicht in der Greifvorrichtung gehalten werden.

5. Greifvorrichtung nach Anspruch 4, **dadurch gekennzeichnet,**
**dass** wenigstens einer der Greiffinger (2.1, 3.1) eines Greiffingerpaares (2, 3) mehrere Kontaktflächen (5) aufweist.

6. Greifvorrichtung nach Anspruch 1, **dadurch gekennzeichnet,**
**dass** die Drehscheibe (4) auf ein Drehkreuz mit vier Kreuzbeinen reduziert ist, die jeweils einen der Führungsschlitze (9) mit Schenkeln gleicher Dicke einschließen.

7. Greifvorrichtung nach Anspruch 1, **dadurch gekennzeichnet,**
**dass** sich die Linearführungen über die gesamte Ausdehnung des Grundkörpers (1) erstrecken.
